# EUROPEAN PATENT SPECIFICATION

(11) **EP 2 121 376 B1**
(45) Date of publication and mention of the grant of the patent: **17.11.2010**
(21) Application number: 08706928.2
(22) Date of filing: 03.03.2008
(51) Int. Cl.: B60N 2/26, B60N 2/30

(54) **A CHAIR FOR A MEANS OF TRANSPORTATION, SUCH AS AN AUTOMOBILE**
SITZ FÜR EIN TRANSPORTMITTEL, WIE ZUM BEISPIEL EIN KRAFTFAHRZEUG
CHAISE POUR UN MOYEN DE TRANSPORT, TEL QU'UNE AUTOMOBILE

(30) Priority: 08.03.2007 DK 200700361
(43) Date of publication of application: 25.11.2009
(73) Proprietor: Pedersen, Claus Dahl, 7700 Thisted (DK)
(72) Inventor: Pedersen, Claus Dahl, 7700 Thisted (DK)
(74) Representative: Larsen, Hans Ole
(86) International application number: PCT/DK2008/000086
(87) International publication number: WO 2008/106969

(56) References cited:
- DE-A1- 19 537 169

## Description

The invention relates to a chair for a means of transportation, in particular for an automobile, comprising a backrest, a seat and a safety belt, and wherein the backrest is provided with an integrated child seat, said backrest being configured for use by adults in a first position and being configured for use by children in a second position, and wherein the rearrangement from the first position to the second position is performed by pivoting a back cushion, which is recessed in the backrest, in a hinge down against the seat, thereby elevating the height of the seat and exposing safety belts for children.

### The prior art

With the increasing acknowledgement of the importance of having a high safety level during transport in automobiles, focus is placed not only on the ability of the cars to resist damage caused by collisions of any type, but also on the safety of the passengers inside the cabin of the car.

It has long been a requirement that all passengers shall use safety belts, and to overcome the problems which arise when children are to be seated safely, special child belts, cushions and chairs have been developed, which the users have to acquire, and which are often a nuisance when children are not transported.

Also, many efforts have been made at finding other more user-friendly solutions for the fastening of children in the car. Such solutions are particularly in demand by passenger carriers, such as taxi and bus operators. To them, it is important that when children are present among the passengers there is a solution for the fastening of children, and that the same solution is not a nuisance to the transport of adults when only adults are present among the passengers.

Known solutions comprise integrating a child seat with belts in the backrest of a chair in such a manner that when the child seat is not to be used, it is concealed in the backrest, and the seat appears as a normal seat for adults and equipped with an ordinary three-point belt.

An example of such a solution is found in the published application DE 19537169 A1, which shows a chair comprising all features of the preamble of claim 1 and in which it is shown how a back cushion may be pivoted down against the seat, so that the height of the seat is elevated and a five-point child belt is exposed. The belt may be operated by means of a pushbutton which controls the tightening of the belt. It is indicated that the back cushion is pivoted about a fixed axis, which is not specified in detail. The system appears to be complicated and expensive with many technical details, and maintenance and exchange are cumbersome.

Another example of an integrated child seat is shown in the document EP0734901 A2. Here, the solution comprises a system which is constructed in a modular manner, and where one position of the backrest is adapted to receive a module which, in an unfolded state, constitutes an elevated child seat which may be used by children who can sit in a three-point belt, or a second module which, in an unfolded state, constitutes a slightly elevated child seat which may be used by children who can sit in five-point belt, or a third module which, in an unfolded state, constitutes an armrest. When making the child seats ready, these are pivoted into position at fixed hinges. All the modules are adapted to be bolted firmly to the frame of the backrest. The solutions are taught in connection with back seats which are built together.

A third example of an integrated child seat is shown in the document US5660437. This document shows an elevated child seat in cooperation with a normal three-point belt, where the lap belt is passed inside a hook-shaped bracket for better fastening of the child. The hook-shaped bracket is arranged such that the belt is moved into the bracket from the front. This involves the risk that the child will be able to slide forwards in connection with a sudden application of the brakes, because the lap belt will be released from the hook-shaped bracket.

### The object of the invention

It is the object of the invention to remedy these many drawbacks, and this is achieved by providing the back cushion of the chair with a hinge which is formed by at least one strap, said strap being provided with an eye at each end, each eye being adapted to cooperate with a bracket on the back cushion and with a bracket on the chair. When the back cushion is provided with a hinge formed by at least one strap which is arranged as stated, and which cooperates with brackets on the back cushion and on the chair, a chair with a back cushion is achieved which is easy to rearrange from a first position for adults to a second position for children, and which is very easy to mount and dismount, so that exchange because of wear or damage may take place without disassembling the entire chair. It is moreover ensured that a chair having a normal back cushion may rapidly be converted into a chair having an integrated child seat, and vice versa.

When, as stated in claim 2, the back cushion is arranged such that it additionally comprises a plate-shaped core of synthetic material to which a bracket is secured, and that the core is encapsulated in an upholstery comprising foamed rubber and a cover, and that the back cushion is made in one piece with a thickness profile increasing toward the rear edge of the back cushion, a chair having a back cushion is achieved, which is very compact, and which meets the requirements of function, use and easy operation.

When, as stated in claim 3, the bracket of the back cushion is arranged such that the eyes of the hinge strap may be secured thereto, and the bracket is provided with rearwardly directed hook means, a back cushion is achieved, which is sturdy, and which meets the requirement of safe fastening of children, and which is adapted for cooperation with a three-point belt.

When, as stated in claim 4, the back cushion is additionally provided with a belt strap having a locking bracket at one end and an eye at the other end, and this belt strap is passed through a slot and a channel in the upholstery rearwards to the rear edge of the back cushion, it is ensured that the belt strap may be secured firmly to the chair, and that the back cushion is adapted for cooperation with a five-point belt.

It is expedient, as stated in claims 5 and 6, to construct the chair on the basis of a frame of profiles, and to provide the parts of the frame with brackets of various types for the attachment of safety belts, and to arrange the brackets such that they are suitable for receiving belt straps, thereby achieving a chair which may be converted, rearranged or serviced in a rapid and simple manner.

Finally, it is expedient, as stated in claim 7, to arrange the chair such that it comprises a three-point belt in the position for adults, and comprises a three-point belt for the slightly bigger children and a five-point belt for the smaller children in the position for children.

### The drawing

Preferred embodiments will be described more fully below with reference to the drawing, in which
- fig. 1: shows a chair according to the invention in the position for adults,
- fig. 2: shows a chair according to the invention in the position for chil- dren,
- fig. 3: shows a transparent view of the back cushion,
- fig. 4: shows a hinge strap,
- fig. 5: shows a sectional view of the back cushion,
- fig. 6: shows a view of the frame structure of the chair,
- fig. 7: shows the attachment of the hinge strap to the frame of the chair,
- fig. 8: shows the tightening system for the back straps of the five- point belt, and
- fig. 9: shows a bigger child fastened in the child seat by a three-point belt.

### Description of the exemplary embodiments

Exemplary embodiments shown in the above-mentioned figures will be described below.

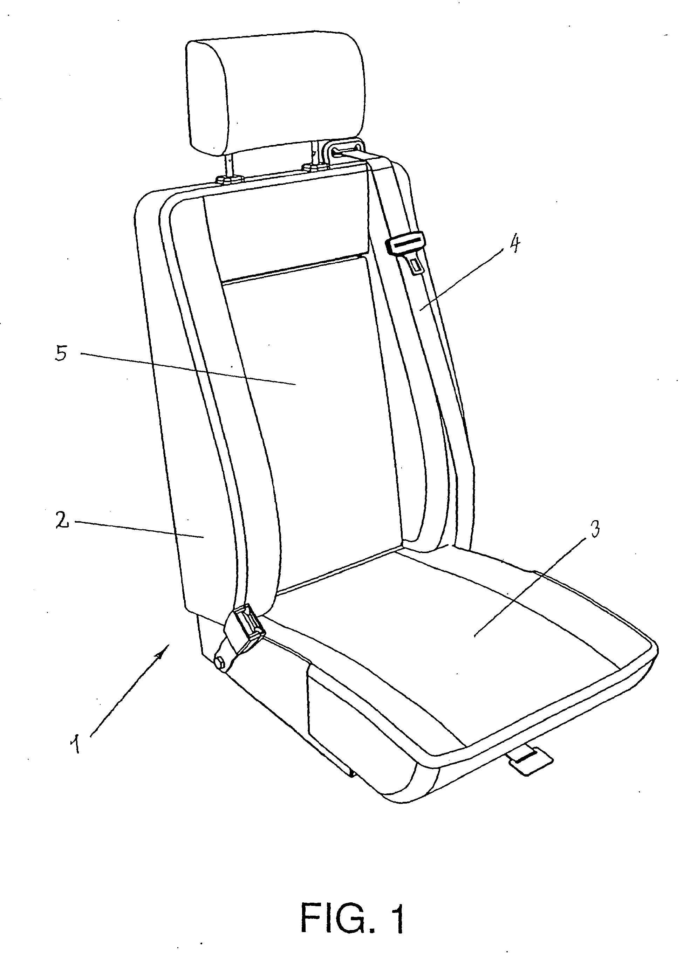

Fig. 1 shows a car chair according to the invention. The chair 1 is shown in its normal arrangement for adults, said chair having a backrest 2, a seat 3 and a three-point belt 4. A movable back cushion 5 is recessed into the backrest and is fixed in the upholstery of the backrest. To achieve a comfortable sitting height, the chair may be placed on frames of various structures and makes.

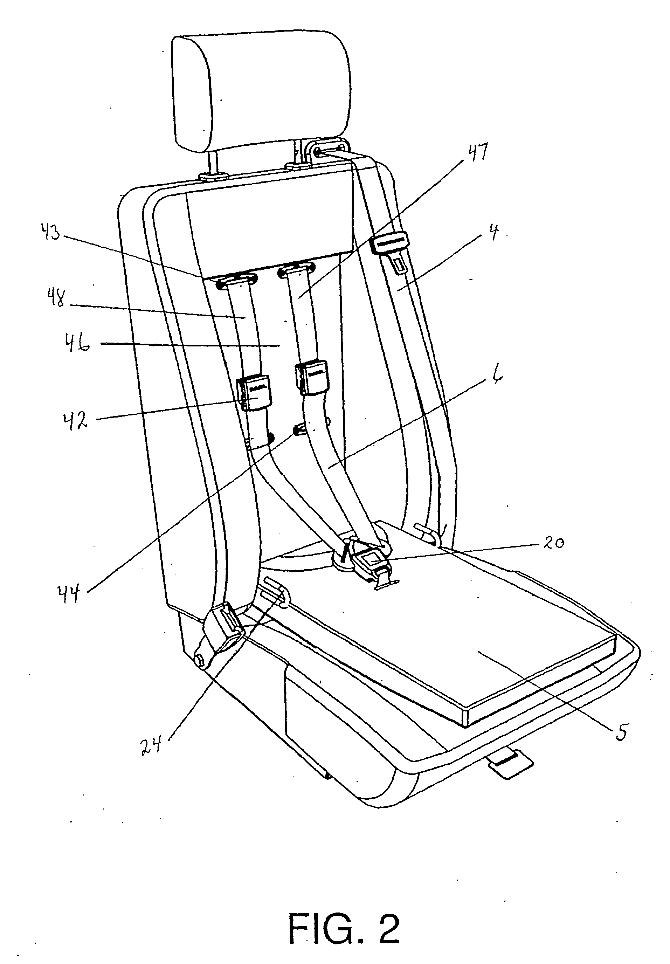

Fig. 2 shows the same car chair as is shown in fig. 1, but in an arrangement which is suitable for children. Here, the back cushion 5 has been pivoted down against the seat 3, such that a five-point belt 6 for children has been exposed, and the sitting height has been elevated slightly.

A car chair having such rearrangement options is in demand by passenger carriers, so that they can meet future requirements with respect to the fastening of adults and children who are transported in their taxies and busses. However, it is important that the solution is attractive to the passenger carriers, so that it does not diminish their possibilities of running their business in a rational and financially sound manner. The solution is also attractive to families with young children, who may thus avoid having to exchange loose child chairs in step with the growth of the child, and who additionally avoid having to move a child chair when the space is to be used by bigger children or adults.

In other words, the car chair must be capable of offering a safe, flexible and operationally simple solution, which is additionally easy to service, and where exchange of a back cushion or a belt may be performed without having to dismount or remove the chair completely.

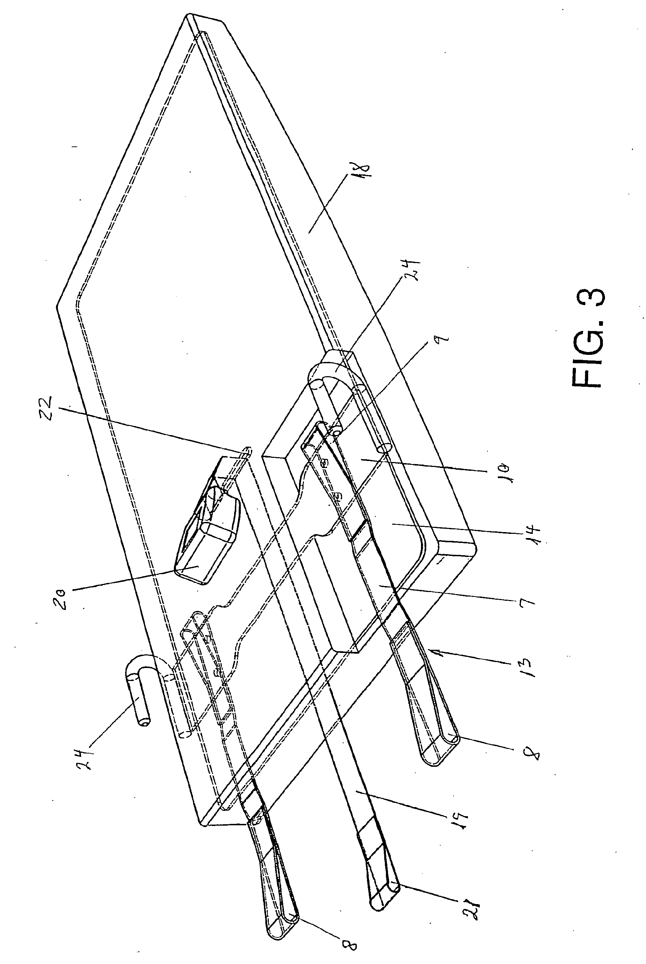

With this end in view, the chair 1 according to the invention is provided with a back cushion 5, as shown in fig. 3. This figure shows how the back cushion is constructed, and which elements are incorporated. It will be seen that the back cushion comprises a plate-shaped core 14 of synthetic material, which is surrounded by an upholstery 18 consisting of foamed rubber 15 and a cover 16, and that the core 14 has secured thereto a bracket 10 which is provided with hook-shaped means 24 at both ends. The bracket 10 is secured to the core 14 by means of known expedient joining methods, and the hook means are welded to the bracket.

The back cushion is moreover provided with hinge straps 13, which are secured to the bracket 10 in that the bracket is passed through the eye 9 of the strap 7, as well as additionally a belt strap 19 for the locking bracket 20 of the five-point belt.

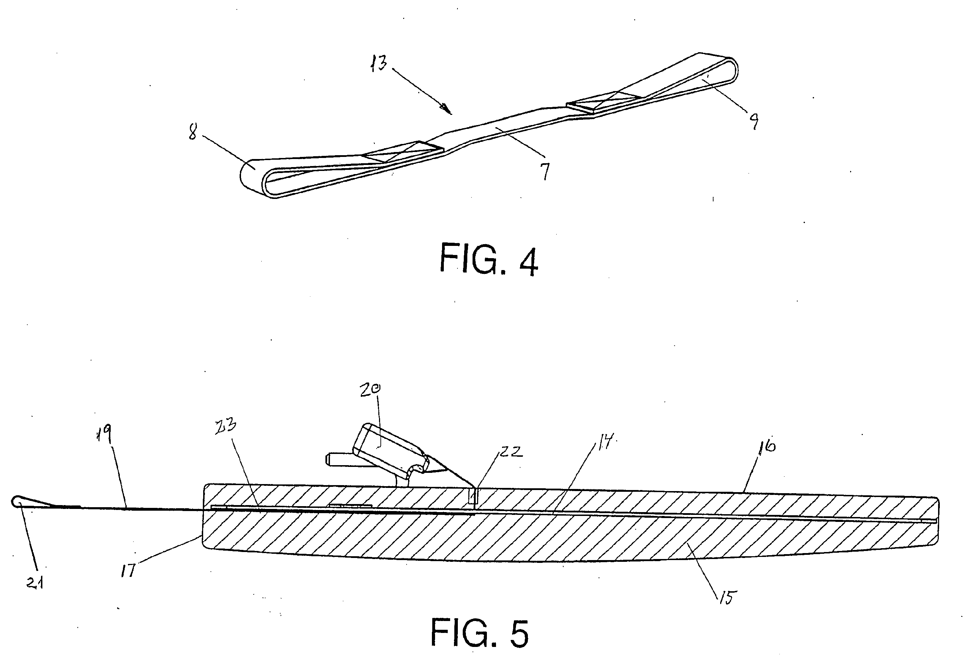

The hinge strap 13 is shown in detail in fig. 4, where it will be seen that it comprises a belt strap 7 whose ends are folded back so as to form an eye 8, 9 at each end of the strap. The eyes 8, 9 are formed by sewing. The hinge straps are made of the same type of material as the safety belts 4, 6. In fig. 3, the hinge strap is shown as two separated straps 7, but may also be made as one strap having a width which essentially corresponds to the length of the bracket 10.

It will be seen in figs. 3 and 5 how the hinge strap 19 is composed and positioned in the back cushion 5. At one end, the belt strap 19 is connected with the central locking bracket 20 of the five-point belt, and, at the other end, it is configured with an eye 21. The belt is pulled through a slot 22 in the upholstery 18 and in the core 14, and then rearwards via a channel 23 in the upholstery and out through the rear edge 17 of the back cushion.

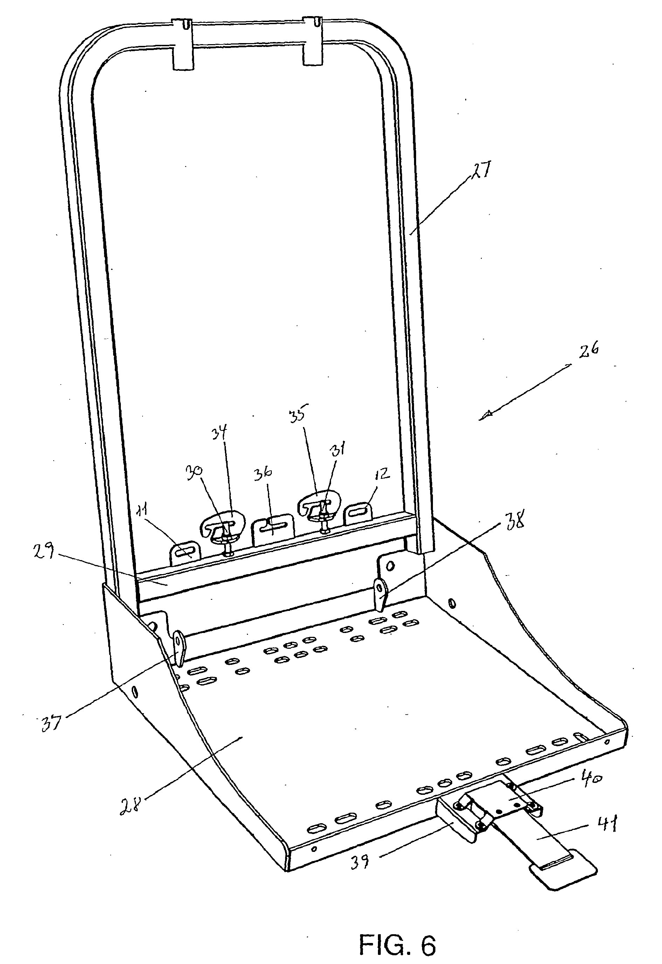

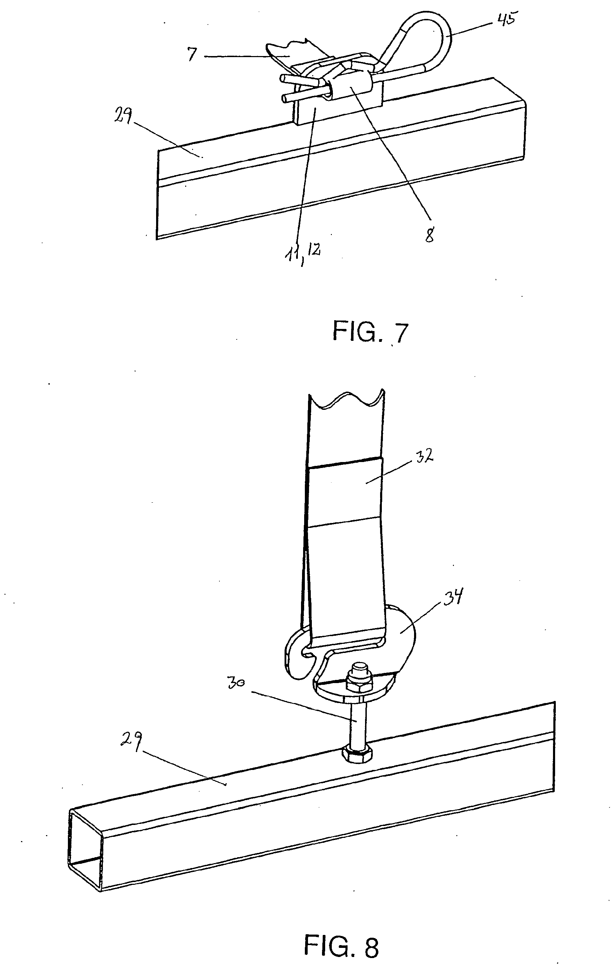

It will be seen in figs. 6 and 7 how the back cushion 5 is mounted by passing the eye 8 of the straps 7 through the brackets 11, 12 and locking the straps by passing a pin 45 through the eye 8, and the belt strap 19 is secured to the bracket 36 by passing the eye 21 down over the bracket. Hereby, the back cushion is firmly anchored to the frame 26 of the chair, and all loads that might occur by a sudden application of the brakes or by a collision, will be absorbed and distributed on the hinge straps 13 and the belt strap 19.

When the anchoring system of the back cushion is constructed as stated above, it is ensured not only that the tensile strength of the anchorage is of the same order as the tensile strength of the safety belts, but also that exchange of the back cushion may take place without the use of tools, and without having to disassemble the chair 1.

Fig. 6 shows how the frame 26 of the chair is constructed, and that it consists of a back abutment 27 having a back plate 46 which is terminated at the bottom by a profile 29. The back plate 46 is shown in fig. 2. The back abutment is coupled firmly to a seat abutment 28.

The profile 29 is provided with brackets 11, 12 for securing the hinge straps 13 from the back cushion, and with the bracket 36 for securing the belt straps 19 from the back cushion, as well as the threaded stays 30, 31 with which the brackets 34, 35 are connected, so that the positions of the brackets on the threaded stay may be changed in connection with the tightening of the back straps 32, 33 (fig. 8) for a five-point belt. The back plate 46 is provided with a set of upper openings 43 and a set of lower openings 44 intended for the arrangement of belt straps for a five-point belt.

The seat abutment 28 is provided with a set of brackets 37, 38 for the attachment of belt straps as well as a bracket 39 in which a belt tightener 40 may be arranged.

A five-point belt comprises back straps 32, 33, shoulder straps 47, 48 having locking brackets fitting the locking bracket 20 on the belt strap of the back cushion, as well as a belt strap 41 for tightening the shoulder straps 47, 48. At the bottom, the shoulder straps are secured to the brackets 37, 38 and are passed through the openings 43 at the top, where they are joined to one belt strap 41 which, behind the back of the chair, is passed down below the seat and forwards to the belt tightener 40.

The back straps 32, 33 extend from the rear side of the back of the chair, where they are secured to a bracket. Then, the back straps are passed through the lower openings 44 to the front side of the back plate, where, together with the shoulder straps 47, 48, they are passed through the tightener brackets 42 and further up to the upper openings 43 and through these and down behind the back, where they are secured to the brackets 34, 35 shown in fig. 6 and fig. 8, and the tightening is adjusted on the threaded stays such that the back belts tightly engage the back plate. (see fig. 8).

The child is positioned in the chair, and the shoulder straps are placed over the child's shoulders. Then, the locking brackets on the shoulder straps are inserted into the locking bracket 20, and a pull is applied to the belt 41 until the shoulder straps are tight. Then, the shoulder straps are adjusted to the height of the child's shoulder by passing the tightener bracket 42 down toward the shoulder.

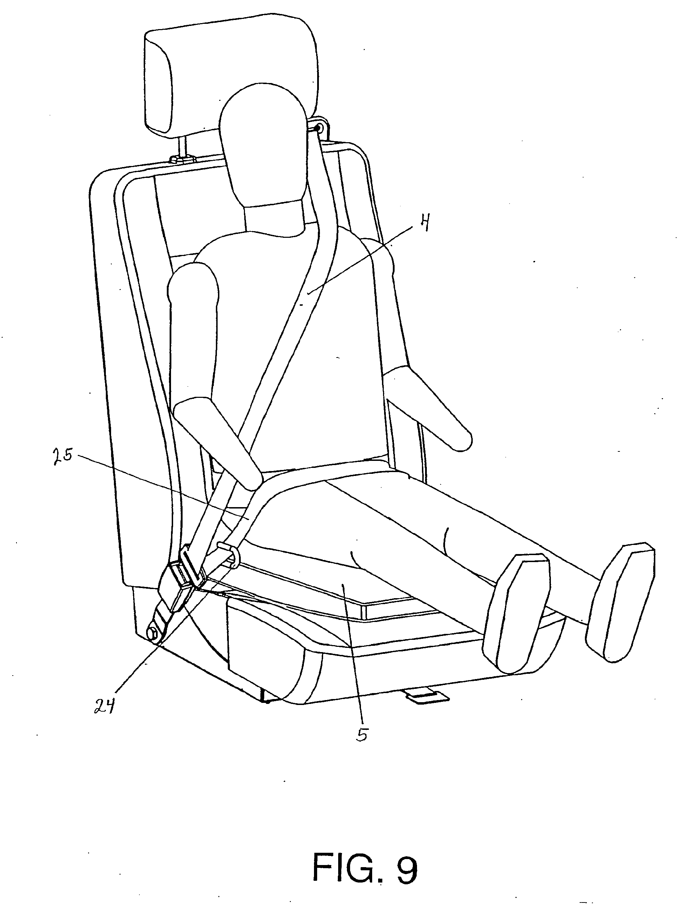

If the child is somewhat bigger, the three-point belt 4 is used, as shown in fig. 9, instead. The back cushion is pivoted down, so that the sitting height is slightly greater, and so that the hook means 24 are exposed. The lap belt 25 is applied inside the hook means to make the belt sit tightly around the child's lap portion, so that the child is held tightly to the seat and is prevented from sliding downwards at a collision or at a sudden application of the brakes.

Fastening of the children is a simple matter both in case of bigger children and in case of smaller children.

The chair 1 may be supplied without straps and without a back cushion with locking brackets for a five-point belt. The chair may then still be used for the slightly bigger children who can sit in a three-point belt, as the lap belt is passed inside the hook means, as stated above.

If the passenger carrier should later be required to transport smaller children as well, he can acquire belts and a new back cushion with incorporated belt strap for subsequent mounting.

## Claims

1. A chair for a means of transportation, such as an automobile, comprising a backrest, a seat and a safety belt, and wherein the backrest is arranged with an integrated child seat, said backrest being configured for use by adults in a first position and for use by children in a second position, and wherein the rearrangement from the first position to the second position is performed by pivoting a back cushion, which is recessed in the backrest, in a hinge down against the seat, thereby elevating the height of the seat and exposing safety belts for children, **characterized in that** the back cushion (5) of the chair (1) is provided with a hinge (13) which is formed by at least one strap (7), said strap being provided with an eye (8, 9) at each end, and that each eye is adapted to cooperate with a bracket (10) on the back cushion and with a bracket (11, 12) on the frame (26) of the chair.

2. A chair according to claim 1, **characterized in that** the back cushion (5) of the chair (1) additionally comprises a plate-shaped core (14) of synthetic material as well as a bracket (10) which is secured to the core, and that the core is encapsulated in an upholstery (18) comprising foamed rubber (15) and a cover (16), and that the back cushion is made in one piece with a thickness profile essentially increasing toward the rear edge (17) of the back cushion.

3. A chair according to claim 1 or 2, **characterized in that** the bracket (10) of the back cushion (5) is adapted to receive the eye (9) of the hinge strap, and that the bracket is provided with rearwardly directed hook means (24) for hooking a lap strap (25) of a three-point belt (24).

4. A chair according to claim 1 or 2, **characterized in that** the back cushion (5) of the chair additionally comprises a belt strap (19) with a locking bracket (20) mounted at one end, and which is provided with an eye (21) at the other end, and that the belt strap is passed through a slot (22) in the rear side of the back cushion, said slot extending through the upholstery (18) and the core (14), and that the belt strap is then passed further on rearwards via a channel (23) in the upholstery to the rear edge (17) of the back cushion, from which the belt strap with the eye (21) emanates.

5. A chair according to claim 1, **characterized in that** the chair (1) is constructed on the basis of a frame (26) comprising a back abutment (27) with a back plate (46), which is terminated by a profile 29, as well as a seat abutment (28).

6. A chair according to claim 1 or 5, **characterized in that** the back plate (46) is provided with upper openings (43) for belt straps and lower openings (44) for belt straps, and that the profile (29) is provided with brackets (11, 12) for hinge straps, a set of threaded stays (30, 31) for the tightening of belt straps as well as a bracket (36) for the belt strap (19) of the back cushion, and that the seat abutment (28) is provided with brackets (37, 38) for securing belt straps and a bracket (39) for a belt tightener (40).

7. A chair according to claim 1, **characterized in that** the chair (1) comprises a three-point belt in the position for adults, and that the chair comprises both a three-point belt and a five-point belt in the position for children.

## Patentansprüche

1. Sitz für ein Transportmittel, wie beispielsweise ein Kraftfahrzeug, der eine Sitzlehne, eine Sitzfläche und einen Sicherheltsgurt umfasst, wobei die Sitzlehne mit einem integrierten Kindersitz eingerichtet ist und die Sitzlehne zur Verwendung durch Erwachsene in einer ersten Position sowie zur Verwendung durch Kinder in einer zweiten Position eingerichtet ist und Umstellung von der ersten Position auf die zweite Position durchgeführt wird, indem ein Lehnen-Polster, das in der Sitzlehne eingelassen ist, an einem Gelenk auf die Sitzfläche nach unten geschwenkt wird, um so die Sitzfläche zu erhöhen und Sicherheitsgurte für Kinder freizulegen, **dadurch gekennzeichnet, dass** das Lehnen-Polster (5) des Sitzes (1) mit einem Gelenk (13) versehen ist, das durch wenigstens ein Band (7) gebildet wird, wobei das Band mit einer Öse (8, 9) an jedem Ende versehen ist, und **dadurch**, dass jede Öse so eingerichtet ist, dass sie mit einem Halter (10) an dem Lehnen-Polster und mit einem Halter (11, 12) an dem Rahmen (26) des Sitzes zusammenwirkt.

2. Sitz nach Anspruch 1, **dadurch gekennzeichnet, dass** das Lehnen-Polster (5) des Sitzes (1) des Weiteren einen plattenförmigen Kern (14) aus synthetischem Material sowie einen Halter (10) umfasst, der an dem Kern befestigt ist, und dass der Kern in einer Polsterung (18) eingeschlossen ist, die Schaumgummi (15) und einen Bezug (16) umfasst, und dass das Lehnen-Polster aus einem Stück mit einem Dickenprofil besteht, das im Wesentlichen zur Hinterkante (17) des Lehnen-Polsters hin zunimmt.

3. Sitz nach Anspruch 1 oder 2, **dadurch gekennzeichnet, dass** der Halter (10) des Lehnen-Polster (5) so eingerichtet ist, dass er die Öse (9) des Gelenkhalters aufnimmt, und dass der Halter mit nach hinten gerichteten Hakeneinrichtungen (24) zum Einhaken eines Beckengurts (25) eines Dreipunkt-Sicherheitsgurtes (24) versehen ist.

4. Sitz nach Anspruch 1 oder 2, **dadurch gekennzeichnet, dass** das Lehnen-Polster (5) des Sitzes des Weiteren ein Riemenband (19) mit einem am einem Ende angebrachten Arretierhalter (20) umfasst, der mit einer Öse (21) an dem anderen Ende versehen ist, und dass das Riemenband durch einen Schlitz (22) in der Rückseite des Lehnen-Polsters hindurch geführt wird, wobei der Schlitz durch die Polsterung (18) und den Kern (14) hindurch verläuft, und dass das Riemenband dann weiter nach hinten über einen Kanal (23) in der Polsterung zu der Hinterkante (17) des Lehnen-Polsters geführt wird, über den das Riemenband mit der Öse (21) austritt.

5. Sitz nach Anspruch 1, **dadurch gekennzeichnet, dass** der Sitz (1) auf der Basis eines Rahmens (26) aufgebaut ist, der eine Lehnen-Auflage (27) mit einer Lehnen-Platte (46), die durch ein Profil (29) abgeschlossen wird, sowie eine Sitzflächen-Auflage (28) umfasst.

6. Sitz nach Anspruch 1 oder 5, **dadurch gekennzeichnet, dass** die hintere Platte (46) mit oberen Öffnungen (43) für Riemenbänder und unteren Öffnungen (44) für Riemenbänder versehen ist, und dass das Profil (29) mit Haltern (11, 12) für Gelenkbänder, einer Gruppe mit Gewinde versehener Stützen (30, 31) zum Anziehen von Riemenbändern sowie mit einem Halter (36) für das Riemenband (19) des Lehnen-Polsters versehen ist, und dass die Sitzflächen-Auflage (28) mit Haltern (37, 38) zum Befestigen von Gurtbändern sowie einem Halter (39) für einen Gurtspanner (40) versehen ist.

7. Sitz nach Anspruch 1, **dadurch gekennzeichnet, dass** der Sitz (1) in der Position für Erwachsene einen Dreipunktgurt umfasst und der Sitz in der Position für Kinder sowohl einen Dreipunktgurt als auch einen Fünfpunktgurt umfasst.

## Revendications

1. Fauteuil pour un moyen de transport tel qu'une automobile, comprenant un dossier, un siège et une ceinture de sécurité, dans lequel le dossier est agencé avec un siège enfant intégré, ledit dossier étant configuré pour être utilisé par des adultes dans une première position et pour être utilisé par des enfants dans une deuxième position, et dans lequel le réagencement de la première position à la deuxième position est réalisé en faisant pivoter un coussin de dossier, qui est enfoncé dans le dossier, dans une articulation vers le bas contre le siège, élevant ainsi la hauteur du siège et exposant les ceintures de sécurité pour les enfants, **caractérisé en ce que** le coussin de dossier (5) du fauteuil (1) est prévu avec une articulation (13) qui est formée par au moins une sangle (7), ladite sangle étant dotée d'un billet (8, 9) au niveau de chaque extrémité, et **en ce que** chaque oeillet est adapté pour coopérer avec une console (10) sur le coussin de dossier et avec une console (11, 12) sur le châssis (26) du fauteuil.

2. Fauteuil selon la revendication 1, **caractérisé en ce que** le coussin de dossier (5) du fauteuil (1) comprend de plus une âme en forme de plaque (14) réalisée avec un matériau synthétique tout comme une console (10) qui est fixée sur l'âme, et **en ce que** l'âme est encapsulée dans un rembourrage (18) comprenant du caoutchouc expansé (15) et un recouvrement (16), et **en ce que** le coussin de dossier est réalisé d'un seul tenant avec un profil d'épaisseur essentiellement croissant vers le bord arrière (17) du coussin de dossier.

3. Fauteuil selon la revendication 1 ou 2, **caractérisé en ce que** la console (10) du coussin de dossier (5) est adaptée pour recevoir l'oeillet (9) de la sangle d'articulation et **en ce que** la console est prévue avec des moyens de crochet (24) dirigés vers l'arrière pour accrocher une sangle ventrale (25) d'une ceinture de sécurité à trois points (24).

4. Fauteuil selon la revendication 1 ou 2, **caractérisé en ce que** le coussin de dossier (5) du fauteuil comprend de plus une sangle de ceinture (19) avec une console de blocage (20) montée au niveau d'une extrémité et qui est prévue avec un oeillet (21) au niveau de l'autre extrémité, et **en ce que** la sangle de ceinture passe à travers une fente (22) dans le côté arrière du coussin de dossier, ladite fente s'étendant à travers le rembourrage (18) et l'âme (14) et **en ce que** la sangle de ceinture passe ensuite en outre vers l'extérieur par l'intermédiaire d'un canal (23) dans le rembourrage jusqu'au bord arrière (17) du coussin de dossier, à partir duquel la sangle de ceinture avec l'oeillet (21) sort.

5. Fauteuil selon la revendication 1, **caractérisé en ce que** le fauteuil (1) est construit sur la base d'un châssis (26) comprenant une butée arrière (27) avec une plaque arrière (46), qui se termine par un profil (29), ainsi qu'une butée de siège (28).

6. Fauteuil selon la revendication 1 ou 5, **caractérisé en ce que** la plaque arrière (46) est prévue avec des ouvertures supérieures (43) pour les sangles de ceinture et des ouvertures inférieures (44) pour les sangles de ceinture, et **en ce que** le profil (29) est prévu avec des consoles (11, 12) pour des sangles d'articulation, un ensemble d'étais filetés (30, 31) pour le serrage de la sangle de ceinture ainsi qu'une console (36) pour la sangle de ceinture (19) du coussin de dossier, et **en ce que** la butée de siège (28) est prévue avec des consoles (37, 38) pour fixer les sangles de ceinture et une console (39) pour un dispositif de serrage de ceinture (40).

7. Fauteuil selon la revendication 1, **caractérisé en ce que** le fauteuil (1) comprend une ceinture à trois points dans la position pour adulte et **en ce que** le fauteuil comprend à la fois une ceinture à trois points et une ceinture à cinq points dans la position pour enfant.
